(19) **Europäisches Patentamt / European Patent Office / Office européen des brevets**

(11) **EP 2 110 974 A1**

(12) **EUROPEAN PATENT APPLICATION**
published in accordance with Art. 153(4) EPC

(43) Date of publication:
**21.10.2009 Bulletin 2009/43**

(51) Int Cl.:
*H04J 11/00* (2006.01)

(21) Application number: **08711043.3**

(22) Date of filing: **08.02.2008**

(86) International application number:
**PCT/JP2008/052164**

(87) International publication number:
**WO 2008/099785 (21.08.2008 Gazette 2008/34)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.02.2007 JP 2007035131**

(71) Applicant: **Mitsubishi Electric Corporation
Chiyoda-ku
Tokyo 100-8310 (JP)**

(72) Inventor: **HARA, Yoshitaka
Tokyo 100-8310 (JP)**

(74) Representative: **Pfenning, Meinig & Partner GbR
Patent- und Rechtsanwälte
Theresienhöhe 13
80339 München (DE)**

(54) **COMMUNICATION DEVICE AND TRANSMISSION CONTROL METHOD**

(57) The communication device (transmitter (1)) according to the present invention that constitutes a multi-carrier wireless transmission system and communicates with a communication device (receiver (2)) including a function of measuring an interference-plus-noise power by using a null symbol inserted into a received data, includes a null-symbol inserting unit (12) that arranges a predetermined number of null symbols in a data-symbol storing region of a data frame to be transmitted to the receiver (2) to generate a data frame including the null symbols, thereby realizing measuring an interference power in a data transmission section with high accuracy.

FIG.1

**Description**

TECHNICAL FIELD

The present invention relates to a communication device that constitutes a digital wireless communication system. More particularly, the present invention relates to a communication device that realizes a high-accuracy measurement of an interference-plus-noise power that is required in a transmission control process. The present invention also relates to a transmission control method in which the interference-plus-noise power is employed.

BACKGROUND ART

Recently, study of basic transmission systems capable of achieving high frequency utilization efficiency has been actively conducted to meet the needs of high-speed wireless communication. Specially, systems that employ multicarrier transmission as the basic transmission mode are drawing more attention, and among them, great emphasis is put on a configuration that is capable of realizing accurate packet transmission control depending on the state of the propagation path.

In multicarrier transmission systems, which are represented by OFDM (Orthogonal Frequency Division Multiplexing) and OFDMA (Orthogonal Frequency Division Multiple Access), it is necessary that a receiver (a communication device on a receiving side) performs an interference power measurement with high accuracy to achieve smooth transmission control of a packet. The following processes can be exemplified as the main processes that are performed by using a measurement result of the interference power.

The measurement result of the interference power is employed when a base station performs a downlink scheduling or determination of a modulation method/coding rate. Specifically, a terminal measures the interference power in the downlink, and notifies a channel quality indicator (CQI) that is generated based on the result to the base station. Then the base station performs the downlink scheduling or the determination of the modulation method/coding rate by using this CQI.

Moreover, the measurement result of the interference power is employed when the base station performs an uplink scheduling or performs determination of the modulation method/coding rate. Specifically, the base station measures the interference power in the uplink, and performs the uplink scheduling or the determination of the modulation method/coding rate by using the measurement result.

Furthermore, a measurement result of the interference power measured for each of the uplink and the downlink is used in the transmission power control. Moreover, a communication device (a base station and a terminal) including a plurality of antennas employs the measurement result of the interference power in generating a combined weight between the antennas. Specifically, the communication device measures the interference power in each antenna and generates a combined weight between the antennas based on the measurement result.

In this manner, the measurement result of the interference power in the communication device (a base station and a terminal) is used at many occasions, which implies that it is important information for smoothly controlling the wireless communication system. This factor necessitates accurate measurement of the interference power. The interference power information that is required is not a pilot signal but interference power information at a position from which data is transmitted.

In conventional multicarrier transmission systems, for example, as shown in Fig. 1 of a later-described Non-Patent Document 1, pilot signals and data signals are arranged in a time frame, and the interference power is calculated by subtracting a pilot signal power from a total received power, both being measured.

Non-Patent Document 1: Ji-Woong Choi; Yong-Hwan Lee; "Optimum pilot pattern for channel estimation in OFDM systems", IEEE Transactions On Wireless Communications, Vol. 4, No. 5, pp. 2083-2088, Sep. 2005

DISCLOSURE OF INVENTION

PROBLEM TO BE SOLVED BY THE INVENTION

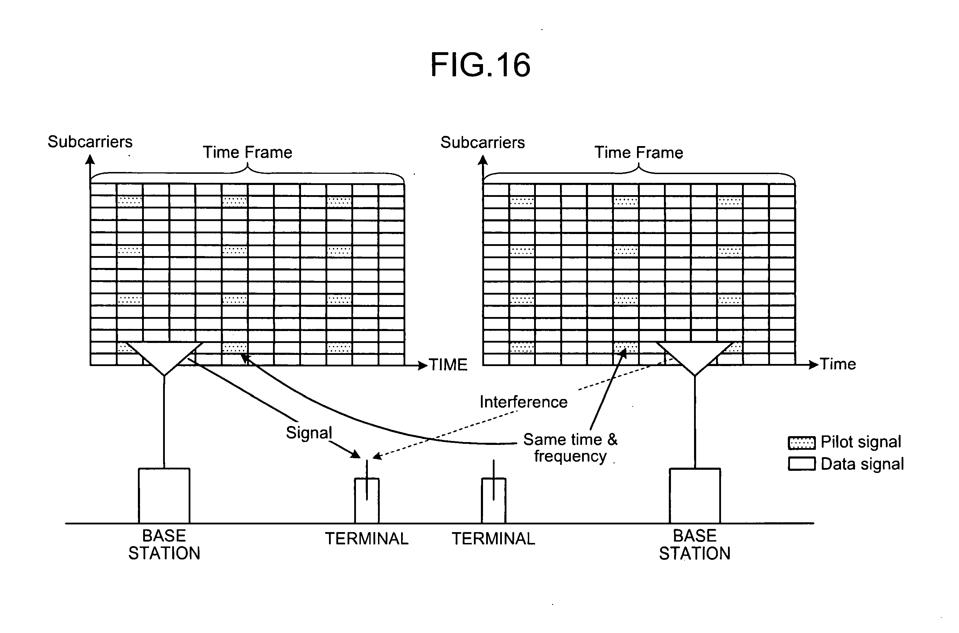

However, because the interference power measured by the above conventional method is an interference power at a position at which a pilot signal exists, and it is different from the interference power at a position at which a data signal exists. For example, a transmission control method is described in "IEEE802.16e (IEEE standard for local and metropolitan area networks Part 16: air interface for fixed and mobile broadband wireless access systems, in IEEE Std802.16e), Feb. 2006" in which a symbol synchronization is performed between cells, and adjacent base stations transmit pilot signals with the same frequency at the same time. In a wireless communication system employing this method, a symbol on a time frequency at which a pilot signal is received gets interference from a pilot signal of another cell as shown in Fig. 16. Moreover, when receiving a data packet, the symbol gets interference from a data packet transmitted from another cell. Generally, a transmission state greatly differs between a pilot signal and a data signal depending on the traffic conditions, so that a great difference may occur between the interference power measured at a position at which a pilot signal exists and the interference power measured at a position at which a data packet exists.

In addition, in an environment in which a propagation path of a desired signal varies, it is known that accuracy in measuring the interference power by using a pilot signal degrades greatly. This phenomenon is explained below for a case in which a transmitter transmits a pilot signal $s(q)(|s(q)|=1, q=1, ...)$ with a power $P_S$ and a received signal $x(q)$ of a q-th pilot signal in a receiver is expressed by the following Equation (1).

[Equation 1]

$$x(q) = \sqrt{P_s}\, h(q)\, s(q) + \sum_{k=1}^{K} \sqrt{P_{ik}}\, i_k(q) + z(q) \tag{1}$$

In Equation (1), $h(q)$ is a complex propagation coefficient between the transmitter and the receiver, $i_k(q)(|i_k(q)|=1)$ is a k-th interference signal component, $P_{ik}$ is a power of the k-th interference component, K is the number of interference signals, and $z(q)$ is a Guassian noise component of a terminal having a power $P_Z$. The received signal $x(q)$ is a received signal extracted from a position at which a pilot signal exists, and a symbol q=1, 2, ... can be a signal in a time direction or in a frequency direction. In a propagation path whose state varies, $h(q)$ slightly changes for each symbol q.

Next, a method in which $q_0$ number of pilot signals are continuously used in measuring the interference power is explained. With the most common method of measuring the interference power in which a pilot signal power is subtracted from a total power, an interference-plus-noise power $P_{IN}$ expressed by the following Equation (2) is measured by the following Equation (3), in which * is a complex conjugate and S' is an estimated value of a signal power.

[Equation 2]

$$P_{IN} = \sum_{k=1}^{K} P_{ik} + P_z \tag{2}$$

[Equation 3]

$$P'_{IN} = \frac{1}{q_0} \sum_{q=1}^{q_0} \left|x(q)\right|^2 - S'$$

$$S' = \left|\frac{1}{q_0} \sum_{q=1}^{q_0} x(q)\, s(q)\, *\right|^2 \tag{3}$$

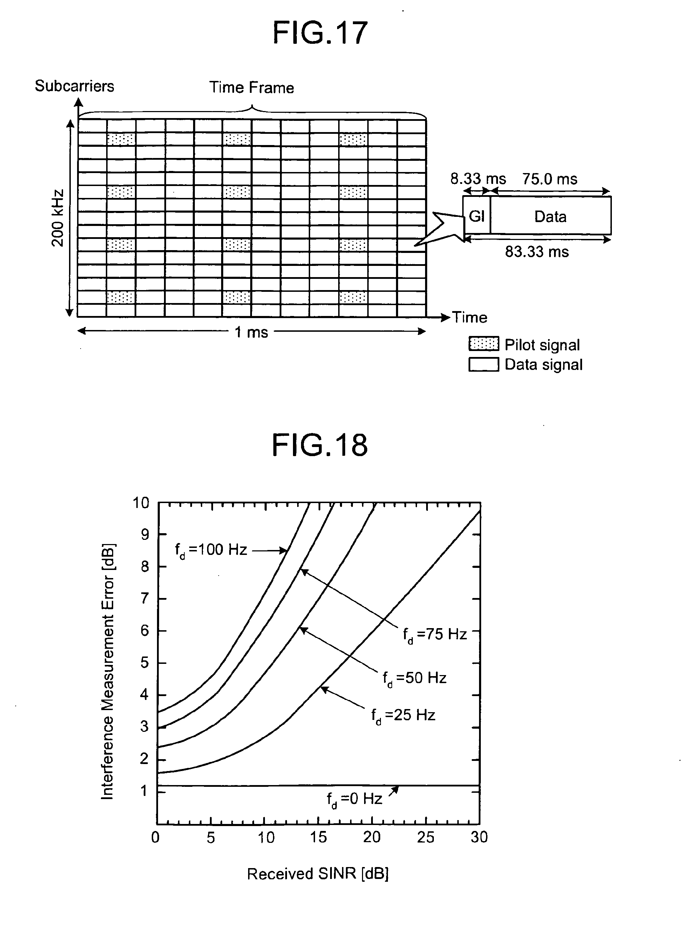

Accuracy in measuring the interference power is evaluated below with the help of a frame configuration shown in Fig. 17 as an example. As shown in Fig. 17, the frame is a time frame of 200 kHz×1 ms, in which three symbols are arranged in the time direction and four pilot signals are arranged in the frequency direction ($q_t$=3, $q_f$=4). An environment is assumed, in which three interference signals (K=3) are QPSK signals that satisfy $P_{i1}=P_{i2}=P_{i3}$ and $KP_{ik}/P_Z$=6 dB. The receiver performs the interference power measurement by the above Equation (3) with four different subcarriers (subcarriers in which pilot signals are arranged) independently, and an average of measurement results ($P'_{IN}{}^{(1)}$, $P'_{IN}{}^{(2)}$, $P'_{IN}{}^{(3)}$, $P'_{IN}{}^{(4)}$ ) is set as an interference power measurement value ($P'_{IN}$).

When $h(q)$ varies with time due to Rayleigh fading with Doppler frequency $f_d$, a result of an evaluation of an interference power measurement error $<(P'_{IN}-P_{IN})^2>^{1/2}$ with respect to the received SINR (Signal to Interference plus Noise power Ratio) theoretical value $P_s|h(q)1^2/(KP_{ik}+P_Z)$ is as shown in Fig. 18. Here, $<\cdot>$ indicates an average in simulation.

As shown in Fig. 18, as the received SINR becomes larger, measurement accuracy of the interference power degrades greatly due to variation in the state of the propagation path. This is due to a fact that a part of the desired signal leaks into the interference power measurement value with the variation in the state of the propagation path. In other words, in an environment in which the received SINR is large, even a small amount of leakage of the desired signal becomes larger than the interference power in some cases, which greatly affects the measurement accuracy of the interference power. Therefore, in the environment in which the state of the propagation path of the desired signal varies, the measurement accuracy of the interference power easily degrades. Although it is explained to perform the interference power measurement based on Equation (3) as an example, degradation in the accuracy similar occurs even if other conventional technologies are used so long as the interference power is measured by using the pilot signal.

As described above, because a great difference may exist between the interference power measured at a position at which a pilot signal exists and the interference power measured at a position at which a data packet exists, accurate measurement of the interference power in a data transmission section is not possible in the conventional interference power measuring methods. Moreover, the measurement accuracy of the interference power easily degrades by variation in the state of the propagation path of a desired signal. In other words, in the conventional interference power measuring methods, it is difficult to measure the interference power with high accuracy, and it is desired to realize interference power measurement in a data transmission section with higher accuracy.

The present invention has been achieved in view of the above problems, and an object of the present invention is to provide a communication device that measures an interference power in a data transmission section with high accuracy.

Moreover, another object of the present invention is to provide a communication device that measures an interference power stably without causing degradation in measurement accuracy even in an environment in which a propagation path varies.

MEANS FOR SOLVING PROBLEM

To solve the above-mentioned problems and to achieve the above-mentioned objects, according to an aspect of the present invention, there is provided a communication device that constitutes a multicarrier wireless transmission system and communicates with a communication device (counter device) including a function of measuring an interference-plus-noise power by using a null symbol inserted into a received data. The communication device includes a data-frame generating unit that arranges a predetermined number of null symbols in a data-symbol storing region of a data frame to be transmitted to the counter device to generate a data frame including the null symbols; and a transmitting unit that transmits the data frame including the null symbols to the counter device by performing a predetermined transmission process.

EFFECT OF THE INVENTION

According to the present invention, because a communication device on a transmitting side transmits a transmission signal with null signals arranged in a data symbol storing region in a data frame, a communication device on a receiving side can measure an interference-plus-noise power in a data section (the data symbol storing region), which has been conventionally difficult, by measuring the interference-plus-noise power at a position at which a null signal exists.

BRIEF DESCRIPTION OF DRAWINGS

[Fig. 1] Fig. 1 is a schematic diagram illustrating a configuration example of a transmitter and a receiver included in a communication device according to the present invention.
[Fig. 2] Fig. 2 is a schematic diagram illustrating an example of a signal transmission format that includes null signals in a wireless transmission system of a first embodiment.
[Fig. 3] Fig. 3 is a schematic diagram for explaining a transmission-signal generating operation according to the first embodiment.
[Fig. 4] Fig. 4 is a schematic diagram for explaining an example of a null-pattern generating method.
[Fig. 5] Fig. 5 is a schematic diagram for explaining another example of a null-pattern generating method.
[Fig. 6] Fig. 6 is a schematic diagram illustrating an example of a format used in notifying of a null pattern key.
[Fig. 7] Fig. 7 is a schematic diagram illustrating an evaluation result of an interference power measurement error according to the first embodiment.
[Fig. 8] Fig. 8 is a schematic diagram illustrating a basic configuration of a downlink wireless transmission according to a second embodiment.

[Fig. 9] Fig. 9 is a schematic diagram illustrating a basic configuration of an uplink wireless transmission according to the second embodiment.

[Fig. 10] Fig. 10 is a schematic diagram illustrating a basic configuration of a downlink wireless transmission according to a fourth embodiment.

[Fig. 11] Fig. 11 is a schematic diagram illustrating an example of a format used in notifying of an interference power ratio.

[Fig. 12] Fig. 12 is a flowchart of an example of a transmission control that is performed using the interference power ratio.

[Fig. 13] Fig. 13 is a schematic diagram illustrating a basic configuration of a downlink wireless transmission according to a fifth embodiment.

[Fig. 14] Fig. 14 is a schematic diagram illustrating a relationship between downlink subband configuration of OFDMA/TDD system and measurement of received SINR according to a sixth embodiment.

[Fig. 15] Fig. 15 is a schematic diagram for explaining a pilot-base CQI notification.

[Fig. 16] Fig. 16 is a schematic diagram for explaining a problem in the conventional technology.

[Fig. 17] Fig. 17 is another schematic diagram for explaining a problem in the conventional technology.

[Fig. 18] Fig. 18 is still another schematic diagram for explaining a problem in the conventional technology.

EXPLANATIONS OF LETTERS OR NUMERALS

| | |
|---|---|
| 1 | transmitter |
| 2 | receiver |
| 11 | transmission-signal generating unit |
| 12 | null-signal inserting unit |
| 13, 23 | pattern-key storing unit |
| 14, 24 | null-pattern generating unit |
| 15 | pilot-signal inserting unit |
| 16 | IFFT unit |
| 17, 28 | antenna |
| 21 | received-signal determining unit |
| 22 | null-signal removing unit |
| 25 | pilot-signal removing unit |
| 26 | interference-plus-noise power measuring unit |
| 30 | information bit sequence |
| 31 | bit sequence after coding |
| 32 | transmission signal before inserting null-signal |
| 33 | transmission signal after inserting null-signal |
| 34 | coding unit |
| 35 | symbol mapping unit |
| 36 | null pattern |
| 41, 42, 61, 62 | base station |
| 51, 52, 71, 72, 73, 74 | terminal |
| 81 to 86 | antenna |

BEST MODE(S) FOR CARRYING OUT THE INVENTION

Exemplary embodiments of a communication device according to the present invention will be explained below in detail with reference to the accompanying drawings. The present invention is not limited to the embodiments explained below.

First Embodiment.

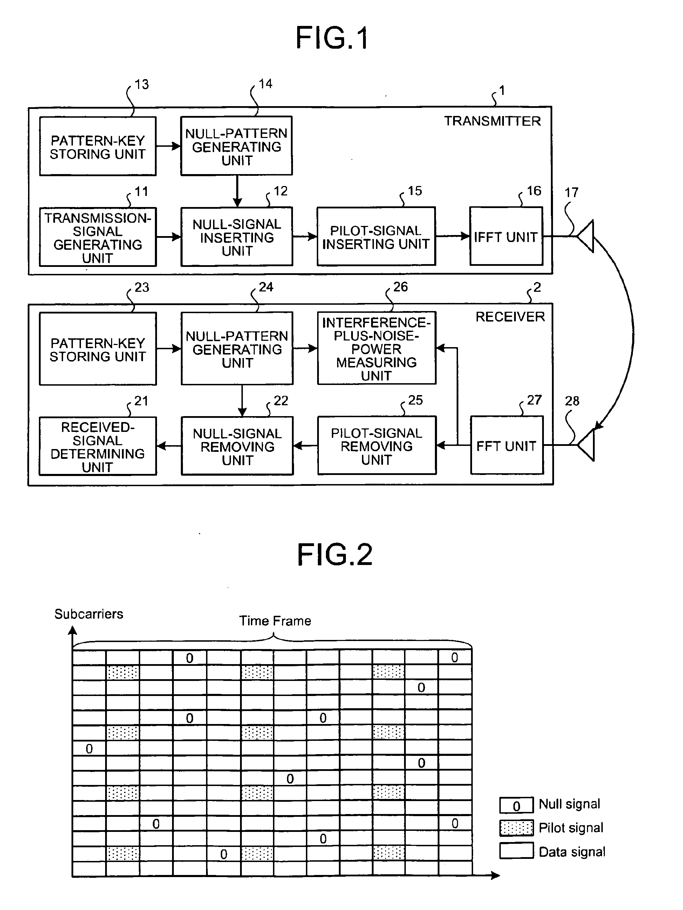

Fig. 1 is a schematic diagram illustrating a configuration example of a transmitter and a receiver included in a communication device according to the present invention. In the configuration depicted in Fig. 1, a communication device on the transmitting side is shown to include only a transmitter 1, and a communication device on the receiving side is shown to include only a receiver 2 for simplifying the explanation; however, an actual communication device includes both of the transmitter 1 and the receiver 2.

As shown in Fig. 1, the transmitter 1 includes a transmission-signal generating unit 11, a null-signal inserting unit 12, a pattern-key storing unit 13, a null-pattern generating unit 14, a pilot-signal inserting unit 15, an IFFT unit 16, and an antenna 17. The receiver 2 includes a received-signal determining unit 21, a null-signal removing unit 22, a pattern-key storing unit 23, a null-pattern generating unit 24, a pilot-signal removing unit 25, an interference-plus-noise-power measuring unit 26, an FFT unit 27, and an antenna 28.

Fig. 2 is a schematic diagram illustrating an example of a format of a signal to be transmitted in the first embodiment. Specifically, in the present embodiment, a signal in which a predetermined number of null signals is arranged in a data portion (a data transmission section) is transmitted. A null signal is a symbol that does not transmit a signal and of which transmission power is 0, and, generally, an act of transmitting no signal is called transmitting a null signal for convenience.

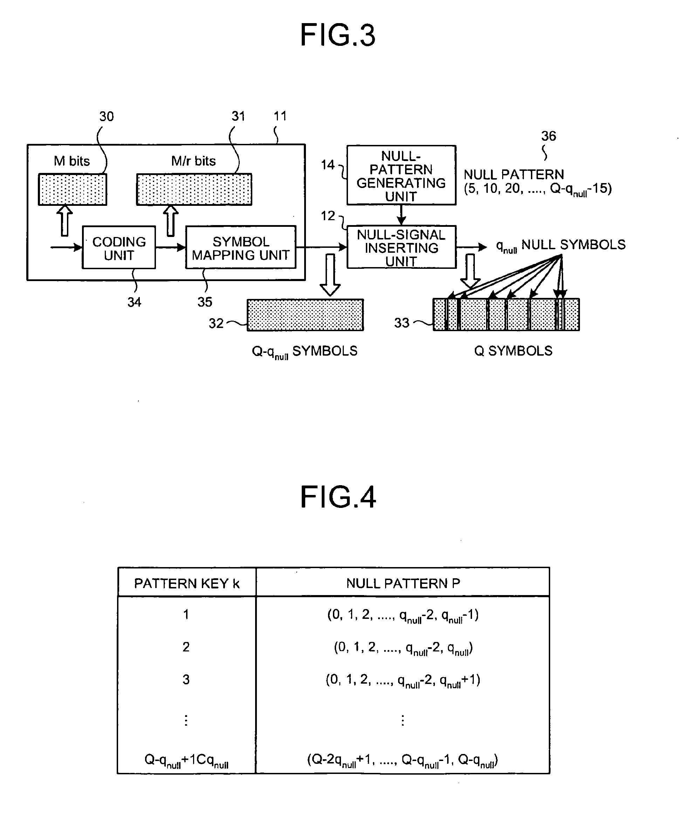

Fig. 3 is a schematic diagram for explaining a transmission-signal generating operation according to the first embodiment. In Fig. 3, a reference numeral 30 is an original information bit sequence, a reference numeral 31 is a bit sequence after coding, a reference numeral 32 is a transmission signal before inserting null signals, a reference numeral 33 is a transmission signal after inserting null signals, a reference numeral 34 is a coding unit that constitutes the transmission-signal generating unit 11, a reference numeral 35 is a symbol mapping unit, and a reference numeral 36 is a null pattern.

An interference power measuring operation that is performed by the communication device of the first embodiment is explained with reference to Figs. 1 to 3, in which the transmitter 1 transmits a signal to the receiver 2 shown in Fig. 1. In the present invention, a signal (see Fig. 2) in which null signals are arranged in part of a conventional data transmission section is transmitted.

First, in the transmitter 1 included in the communication device on the transmitting side, the transmission-signal generating unit 11 generates a transmission signal by performing.a process same as that in the conventional method. Specifically, as shown in Fig. 3, the coding unit 34 codes the original information bit sequence 30 to be transmitted, and the symbol mapping unit 35 performs mapping of the bit sequence 31 after coding to an IQ phase in accordance with a certain modulation method and generates the transmission signal 32 (a transmission signal without null signals). On-the other hand, the null-pattern generating unit 14 generates a null pattern (information indicating inserting positions of null signals) of null signals to be inserted into the transmission signal 32 in accordance with a pattern key that is prestored in the pattern-key storing unit 13 shown in Fig. 1, and passes the generated null pattern to the null-signal inserting unit 12. The null-signal inserting unit 12 inserts null signals of which transmission power is 0 into the transmission signal 32 in accordance with the null pattern received from the null-pattern generating unit 14. As shown in Fig. 3, the transmission signal 32 before inserting the null signals consists of $Q-q_{null}$ symbols including data symbols and pilot symbols the same as in the conventional method.

The null-pattern generating unit 14 generates a combination of symbol numbers indicating the positions of the null signals in the transmission signal, i.e., the null pattern 36, in accordance with the pattern key stored in the pattern-key storing unit 13. For example, the null pattern 36 is represented as $P=(5, 10, 20, ..., Q-q_{null}-15)$, and n (corresponding to the symbol number constituting the null pattern) means to insert a null signal between an n-th symbol and an (n+1)-th symbol of the transmission signal 30. A null pattern P is a pseudo random pattern.

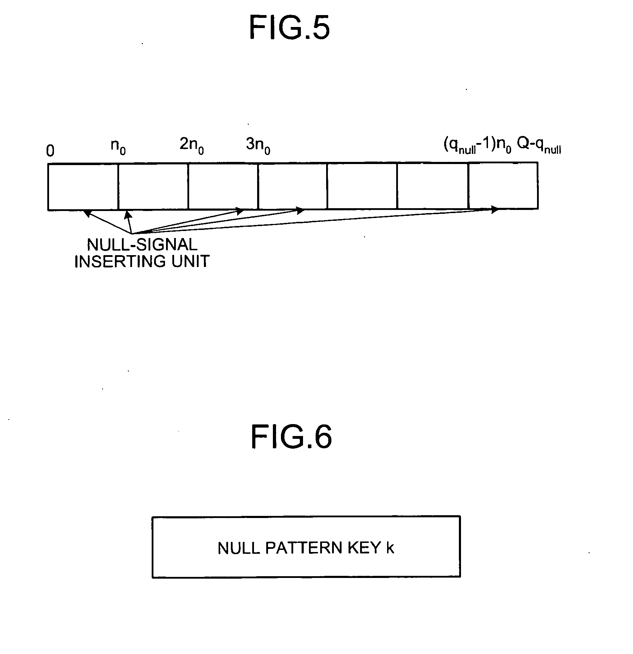

A method of generating a null pattern is explained with reference to Fig. 4 and Fig. 5. Fig. 4 and Fig. 5 are schematic diagrams for explaining a method of generating a null pattern. In the example shown in Fig. 4, pattern keys k correspond to individual null patterns, and all possible null patterns are listed. The total number of the null patterns is $Q-q_{null}+1Cq_{null}$, and the pattern key k is randomly determined from among them, whereby a pseudo random null pattern is determined. In the example shown in Fig. 5, a null-pattern generating method is shown that is different from that shown in Fig. 4. In the method depicted in Fig. 5, when $Q-q_{null}+1$ is a multiple of $q_{null}$, assuming $n_0=(Q-q_{null}+1)/q_{null}$, one integer is selected from each of the ranges of 0 to $n_0-1$, no to $2n_0-1$, $2n_0$ to $3n_0-1$, ..., $(n_0-1)q_{null}$ to $n_0q_{nu}ll-1$ as a factor of the null pattern P. That is, the null pattern p becomes $P=(rand(k, 0), n_0+rand(k, 1), 2n_0+rand(k, 2), ..., (q_{null}-1)n_0+rand(k, q_{null}-1))$, where rand(k, u) is a random variable that is one integer selected from among 0 to $n_0-1$, in other words, a u-th random variable based on the pattern key k.

Thus, there are various methods for generating a pseudo random null pattern. In the present invention, any method can be used to generate a pseudo random null pattern.

Returning to the explanation of the operation of the communication device, the null-signal inserting unit 12 inserts null signals between an n-th symbol and an (n+1)-th symbol (n is a symbol number that the null pattern represents) of the transmission signal generated by the symbol mapping unit 35 in accordance with the null pattern received from the null-pattern generating unit 14. The transmission signal after insertion of the null signals contains Q symbols and pilot signals that are added by the pilot-signal inserting unit 15. Finally, the transmission signal is subjected to IFFT (Inverse Fast Fourier Transform) in the IFFT unit 16 and is then transmitted from the antenna 17.

On the other hand, in the receiver 2 included in the transmission device on the receiving side, the FFT unit 27 performs FFT (Fast Fourier Transform) on the signal received by the antenna 28. Next, the pilot-signal removing unit 25 removes the pilot signals from the received signal after FFT. The null-pattern generating unit 24 generates a null pattern by using a pattern key that is stored in the pattern-key storing unit 23 and this key is the same as that used in the transmitter 1, and the null-signal removing unit 22 removes symbols corresponding to the null signals from the received signal after the pilot signals are removed. A fixed pattern key that is predetermined between the transmitter and the receiver can be used. Alternatively, the pattern key to be used can be notified from the transmitting side to the receiving side and the one indicated by the notification content can be used. Fig. 6 is a schematic diagram illustrating an example of a format used when notifying of the null pattern key k from the transmitter to the receiver. When a null pattern is notified from the transmitting side to the receiving side, the transmitter can selectively use a null pattern depending on situations or the like. For example, when it is desired to obtain a more averaged interference-plus-noise power measurement result, the number of null patterns is increased.

The null-signal removing unit 22 removes symbols corresponding to the null signals from an input signal (a received signal after the pilot signals are removed), and outputs only symbols in which data exists. The received-signal determining unit 21 detects the received signal by performing a process same as the conventional one. The interference-plus-noise-power measuring unit 26 measures an interference-plus-noise power of the received signal after FFT. At this time, the interference-plus-noise-power measuring unit 26 measures the interference-plus-noise power at positions at which null signals exist, so that the interference-plus-noise power can be accurately measured. Specifically, a position of a null signal included in the received signal is recognized based on the null pattern generated by the null-pattern generating unit 24, and a received signal at the position is extracted to measure the interference-plus-noise power.

The received signal $X_{null}(q)(q=1, ..., q_{null})$ at the position of the null signal included in the received signal is expressed by the following Equation (4).

$$[Equation\ 4]$$

$$x_{null}(q) = \sum_{k=1}^{K} \sqrt{P_{ik}} i_k(q) + z(q) \qquad (4)$$

The received signal $x_{null}(q)$ does not include a desired signal component different from the received signal x(q) expressed by Equation (1). Therefore, the interference-plus-noise power $P_{IN}$ expressed by Equation (2) can be measured easily by using the following Equation (5).

$$[Equation\ 5]$$

$$P'_{IN} = \frac{1}{q_{null}} \sum_{q=1}^{q_{null}} |\ x_{null}(q)\ |^2 \qquad (5)$$

An interference signal generally has the same average interference-plus-noise power at positions of a null signal and a data signal, so that an interference power in a data section can be measured by setting $q_{null}$ to be an adequate value. Therefore, in the present invention, the interference-plus-noise power can be measured without being affected by propagation variation of the desired signal.

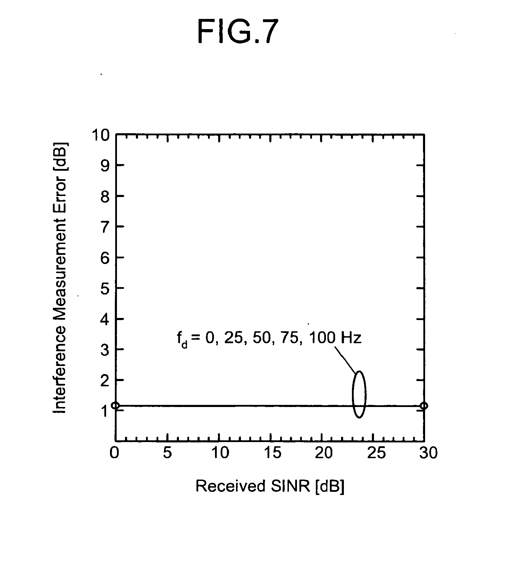

For explaining performance of the interference power measurement in the present invention, null symbols $q_{null}=12$ are randomly arranged in the data section as shown in Fig. 2 and the interference-plus-noise power measurement is evaluated. In evaluating the performance of the interference-plus-noise power measurement when the frame configuration shown in Fig. 2 is used, parameters such as time and band are the same as those shown in Fig. 17, that is, pilot signals (three symbols in a time direction and four symbols in a frequency direction) are arranged in the time frame 200 kHz×1 ms ($q_t$=3, $q_f$=4). Moreover, an environment is assumed, in which three interference signals (K=3) are QPSK signals that satisfy $P_{i1}=P_{i2}=P_{i3}$ and $KP_{ik}/P_z$=6dB. Fig. 7 is a schematic diagram illustrating a result of an evaluation of an interference power measurement error $<(P'_{IN}-P_{IN})^2>^{1/2}$ with respect to a received SINR theoretical value $P_S|h(q)|^2/(KP_{ik}+P_z)$. As shown in Fig. 7, the interference power measurement error when the present invention is employed does not depend on the pilot signal power and the propagation variation of the desired signal.

The measurement result of the interference-plus-noise power is fed back to the transmitter 1 to be used for the transmission control operation. The receiver 2 itself also performs the transmission control operation by using the measurement result of the interference-plus-noise power. As the transmission control operation, for example, there are a scheduling process in a wireless communication system or the like, a modulation method/coding rate (MCS: Modulation&Coding Scheme) determining process, a transmission power controlling process, a combined weight generating process between antennas in a communication device that includes a plurality of antennas.

In this manner, in the present embodiment, the communication device on the transmitting side transmits a transmission signal after inserting null signals in the data section, and the communication device on the receiving side measures the interference-plus-noise power at the positions at which the null signals are inserted. Therefore, the interference-plus-noise power in the data section can be measured, which is difficult in the conventional method. Moreover, the interference-plus-noise power can be stably measured for each time frame independent of the desired signal power and the propagation path variation.

In the present invention, null signals are randomly arranged in a predetermined time-frequency region, so that a subcarrier in which a null signal exists changes with time. Therefore, the average interference power can be measured in the time-frequency region.

The configuration is not limited to that shown in Fig. 1. Even if the null-signal inserting unit 12 and the pilot-signal inserting unit 15 are arranged in an opposite order in the transmitter 1, the operation can be performed by appropriately setting them. Similarly, the null-signal removing unit 22 and the pilot-signal removing unit 25 can be arranged in reverse order in the receiver 2.

Second Embodiment.

A communication device of the second embodiment is explained below. In the above-explained first embodiment, an operation of transmitting a signal from one transmitter to one receiver is explained. In the present embodiment, the present invention is employed to a case in which a plurality of transmitters and receivers transmits and receives signals at the same time. The communication device (transmitter and receiver) in the present embodiment has a configuration same as the transmitter 1 and the receiver 2 in the above first embodiment (see Fig. 1).

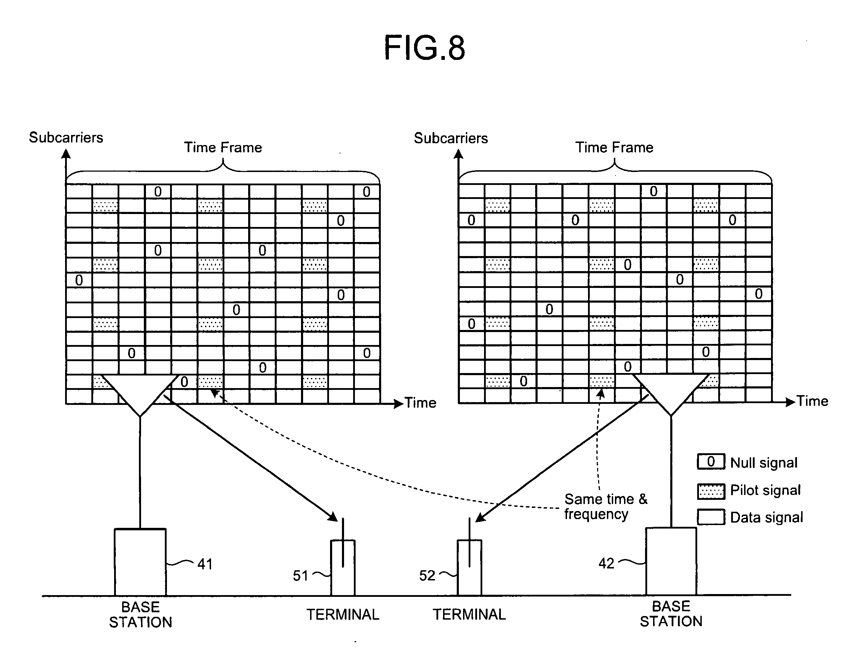

Fig. 8 is a schematic diagram illustrating a basic configuration of a downlink wireless transmission according to the second embodiment. The wireless communication system according to the second embodiment includes, for example, two base stations 41 and 42 and two terminals 51 and 52. The base station 41 transmits a signal to the terminal 51, and the base station 42 transmits a signal to the terminal 52.

In the present embodiment, when transmitting a signal in a downlink, each base station generates a signal in which null signals are arranged in accordance with a different null pattern. The null pattern is generated as a random pattern same as the first embodiment. Each base station (transmitter) notifies terminals in a cell of the null pattern key in a format shown in Fig. 6 in the downlink as information indicating the null pattern. Each terminal (receiver) in the cell recognizes the null pattern that the base station used when generating the transmission signal based on the null pattern key based on the null pattern key notified from the base station. Then, in the signal receiving process, after removing the null signals from the received signal in accordance with the null pattern, a typical receiving process is performed. The terminal measures the interference-plus-noise power in the same manner as the first embodiment.

Regarding the operations of the base station 41 and the terminal 51, each base station randomly generates null signals, so that the interference power is averagely the same between symbols for the terminal 51 receiving the null signals from the base station 41 and symbols for the terminal 51 receiving data signals from the base station 41. Therefore, the interference-plus-noise power in a data section can be measured by setting $q_{null}$ to be an adequate value in Equation (4). Moreover, in the terminal 52, the interference-plus-noise power in a data section can be measured in the same manner by using null signals included in a signal from the base station 42.

In this manner, in the present embodiment, each base station as the communication device on the transmitting side uses a different null pattern to perform an operation of generating a transmission signal that includes null signals, and notifies the terminal in a cell of a pattern key used for generating the null pattern. Therefore, terminals that exist in adjacent cells can measure the interference-plus-noise power at the same time. That is, the present invention can be applied also to a system in which a plurality of terminals performs data transmission at the same time in a multi-cellular environment in which a plurality of base stations exists.

Each base station arranges null signals by using a random null pattern, so that a subcarrier in which a null signal exists changes with time. In this manner, the position at which the null signal exists randomly changes, so that terminals present in a plurality of cells can measure the interference power at the same time.

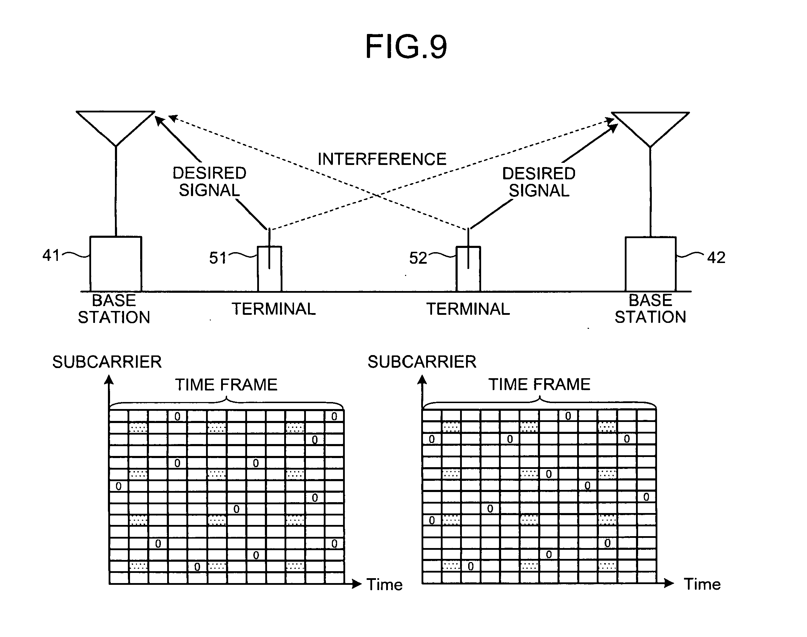

The above explanation is for a downlink; however, as shown in Fig. 9, the present invention can be applied to an uplink. In the case of uplink, each terminal (the terminals 51 and 52) can use a different null pattern to perform an operation of generating a transmission signal that includes null signals. Therefore, similarly to the case of the downlink, each base station (the base stations 41 and 42) can measure the interference-plus-noise power excluding the desired signal at the same time. Thus, similarly to the case of the downlink, in the uplink, the interference-plus-noise power can be measured at the same time in each receiver by two or more transmitters using different null patterns.

Third Embodiment.

A communication device of the third embodiment is explained below. In the present embodiment, regarding a process of generating a transmission signal that includes null signals explained in the first and second embodiments, a method of generating a transmission signal is explained, in which very high transmission efficiency can be realized. The configuration of the communication device (a transmitter and a receiver) in the present embodiment is the same as that of the transmitter 1 and the receiver 2 in the first embodiment (see Fig. 1).

As explained in the first embodiment, the transmitter 1 transmits Q symbols obtained by summing data of $Q-q_{null}$ symbols and null signals of $q_{null}$ symbols. In the actual communication environment, Q is regarded as a fixed value in most cases. In the case, the number of symbols to be used for data transmission changes in accordance with $q_{null}$.

As shown in Fig. 3, in the transmission-signal generating unit 11 of the transmitter 1, the coding unit 34 codes input M-bit information at a coding rate r and outputs it after converting it into M/r bit. Moreover, the symbol mapping unit 35 performs mapping of the input M/r bit information to symbols having the IQ phase and generates a $Q-q_{null}$ data symbol.

When transmitting a constant number of information bits M, the coding rate r of the information bit needs to be raised as the number of null symbols $q_{null}$ increases. On the other hand, if the coding rate r is raised, the transmission efficiency is slightly lowered. Therefore, although the present invention can realize measurement of the interference power with high accuracy, the transmission efficiency is slightly lowered as the coding rate rises, i.e., the coding rate and the transmission rate have a trade-off relationship. Thus, it is important to appropriately determine the number of symbols of the null signals to maintain high data transmission efficiency while realizing measuring the interference power with high accuracy.

According to the above explanation, in the present invention, when transmitting constant information, the coding rate is raised to $Q/(Q-q_{null})$ times of that in the conventional method. Therefore, it is desired to keep $Q/(Q-q_{null})$ to a value close to 1 to suppress the large increase of the coding rate. In the actual environment, one packet generally includes a data signal of equal to or more than 100 symbols ($Q \geq 100$). It has been found that if 10 to 15 or more symbols $q_{null}$ are used, the interference power can be measured with high accuracy (the measuring error can be suppressed within a desired range). Thus, it is practical to satisfy $q_{null}/Q \leq 15\%$ (corresponding to $Q \geq 100$, $q_{null} \leq 15$).

According to the present embodiment, the ratio of null signals to be arranged in the data symbol section is kept to equal to or less than 15%. Therefore, a high data transmission efficiency (a data transmission efficiency close to that achieved by using the conventional method) can be maintained while realizing measurement of an interference power with high accuracy.

In the present invention, null signals that appear with a density of equal to or less than 15% can be specified by using one pattern key.

Fourth Embodiment.

A communication device of the fourth embodiment is explained below. In the present embodiment, the present invention is applied to a transmission control when the communication device including a plurality of antennas transmits a signal.

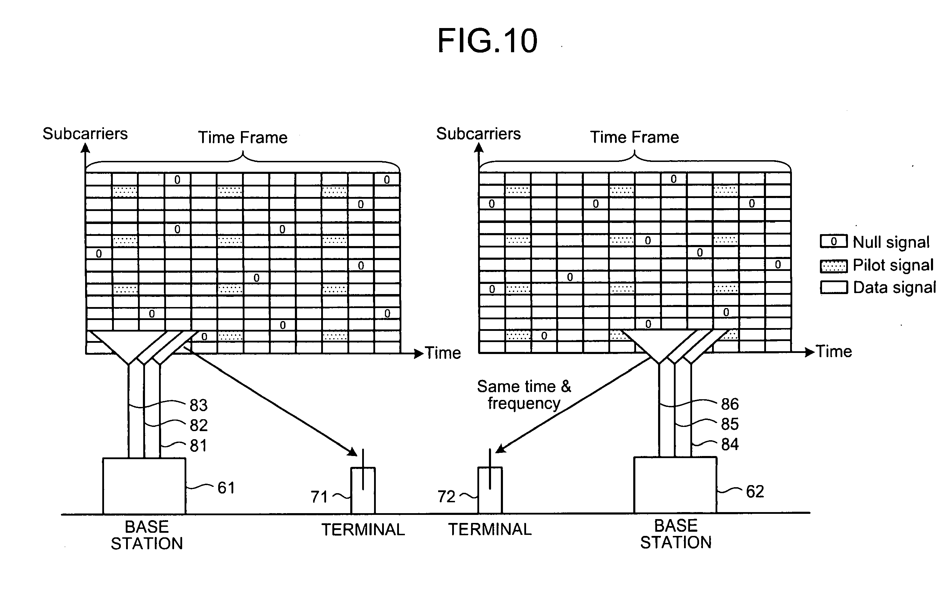

Fig. 10 is a schematic diagram illustrating a basic configuration of a downlink wireless transmission according to the fourth embodiment. A wireless communication system according to the fourth embodiment includes, for example, a plurality of base stations 61 and 62 each including a plurality of antennas and a plurality of terminals 71 and 72. The base station 61 includes a plurality of antennas 81 to 83, and the base station 62 includes a plurality of antennas 84 to 86. In the present embodiment, explanation is given of a case in which the base station 61 transmits a signal to the terminal 71 and the base station 62 transmits a signal to the terminal 72. The basic configuration of the communication device (a transmitter and a receiver) of the present embodiment is the same as the transmitter 1 and the receiver 2 in the above first embodiment (see Fig. 1).

When transmitting a signal in a downlink, each base station (transmitter) of the present embodiment transmits a signal (a signal including null signals) that is generated by using the same null pattern from the antennas. That is, a plurality of antennas included in one transmitter transmits null signals with the same frequency at the same time. In this case, the antennas do not always transmit the same data symbol. A plurality of signals can be transmitted by spatial multiplexing or a plurality of antennas can transmit different data symbols.

For example, when the antennas 81 to 83 of the base station 61 shown in Fig. 10 use the same null pattern, in the terminal 71, there is no interference in the same cell for symbols in which the base station 61 arrange the null signals, and therefore the interference power only from another cell can be measured. In this case, the different base station 62 preferably uses a different null pattern same as explained in the second embodiment. When the different base station 62 uses the antennas 84 to 86, the same null pattern is used in the antennas in the same manner.

According to the present embodiment, in the environment in which a base station includes a plurality of antennas, a terminal can measure only an interference power $I_{other}$ from another cell. When the desired base station 61 transmits a signal to another terminal in the cell by spatial multiplexing, the terminal 71 may receive the interference power even from within the cell. However, because the terminal 71 takes an interference power $I_{cell}$ that occurs in the cell into consideration, a propagation state can be measured by using pilot signals included in a signal to be transmitted from the base station 61 to another terminal. Moreover, the interference power $I_{cell}$ in a data signal region can be estimated based on offset information (information about power difference, power ratio, or the like) between a pilot signal power and a data signal power to be transmitted to another terminal. The terminal 71 can obtain information about pilot signals in a signal to be transmitted to another terminal and the offset information from the base station 61 in advance.

In this manner, the terminal 71 can measure the interference power $I_{other}$ from another cell and the interference power $I_{cell}$ in the cell individually. Consequently, the terminal 71 can notify the base station 61 of a ratio R ($=I_{cell}/I_{other}$) between the interference power from another cell and the interference power in the cell.

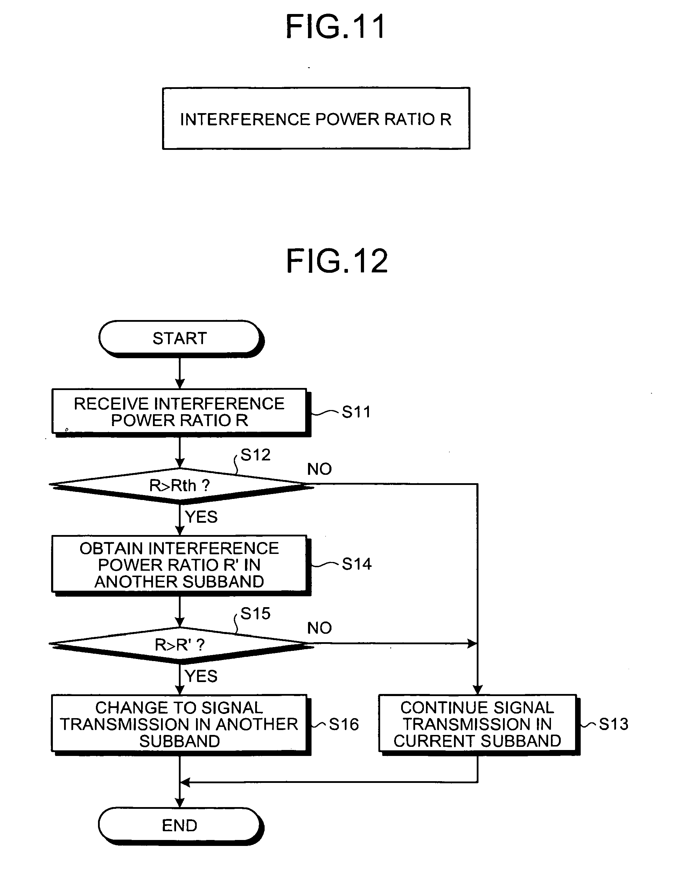

Fig. 11 is a schematic diagram illustrating an example of a format used in notifying of the interference power ratio R from a terminal to a base station. The base station 61 can obtain the interference power ratio R in the terminal 71 by notifying of the format in the uplink. Moreover, the base station 61 can perform transmission control with high accuracy by using the ratio R between the interference power from another cell and the interference power of the local cell. The terminal 71 can notify the base station 61 of the measurement result itself ($I_{cell}$ and $I_{other}$) instead of the interference power ratio R.

Fig. 12 is a flowchart of an example of a transmission control that a base station performs by using the interference power ratio R. The terminal 71 performs communication using part of subbands in overall bandwidth in OFDMA using OFDMA transmission system. When receiving the interference power ratio R in a used subband from the terminal 71 (Step S11), the base station 61 compares R with a determination threshold $R_{th}$ (Step S12). If the result of the comparison indicates that R is equal to or lower than the threshold (No at Step S12), the signal transmission in the current subband is continued (Step S13). On the other hand, if the result of the comparison done at Step S12 indicates that R is higher than the threshold (Yes at Step S12), the base station 61 instructs the terminal 71 to notify of an interference power ratio R' in another subband, and obtains the interference power ratio R' in another subband (Step S14). Then, the two interference power ratios R and R' are compared (Step S15). If R≤R' (No at Step S15), the signal transmission in the current subband is continued (Step S13). On the other hand, if R>R' (Yes at Step S15), the base station 61 changes the subband for the signal transmission to another subband (Step S16). At this time, the base station 61 notifies the terminal 71 of the change of the subband, and the terminal 71 changes the subband in accordance with the content of the notification to receive the signal. Each base station performs the above transmission control, enabling to reduce interference in a cell, which occurs by spatial multiplexing.

In the terminal 71, the sum of the interference powers in the cell and from another cell can be obtained by $I_{cell}+I_{other}$.

In this manner, in the present embodiment, a base station transmits null signals from a plurality of antennas with the same frequency at the same time. Accordingly, a terminal can measure the interference power from another cell. Moreover, the interference power from another cell and the interference power in a local cell can be separately measured, so that detailed interference information can be obtained. By performing the transmission control by using obtained interference power information, the interference power in the cell can be reduced.


Fifth Embodiment.


A communication device of the fifth embodiment is explained below. In the present embodiment, the present invention is employed to a transmission control when another communication device transmits a signal to a communication device including a plurality of antennas.

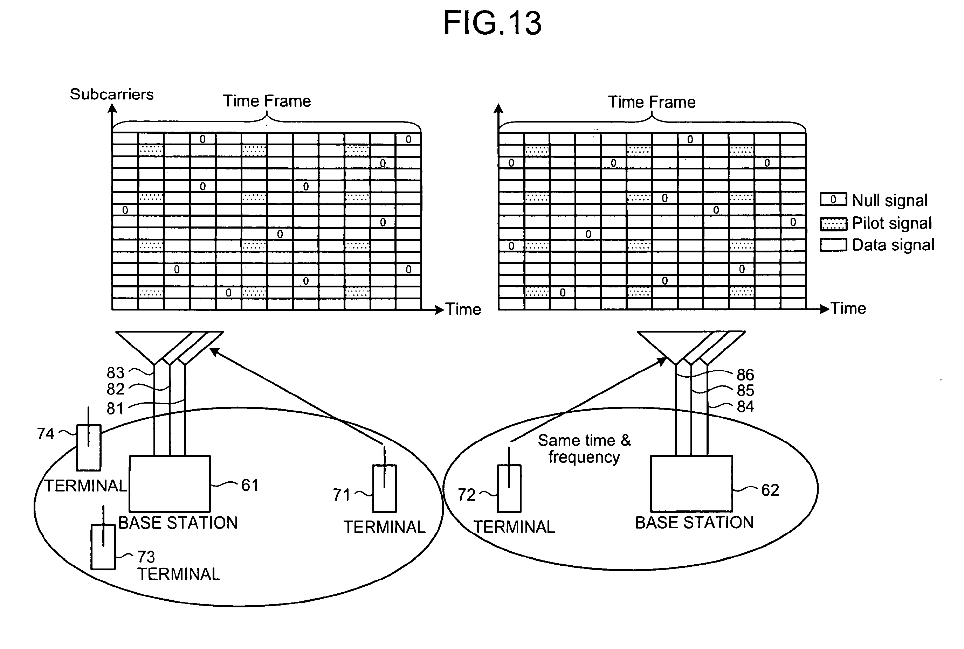

Fig. 13 is a schematic diagram illustrating a basic configuration of a downlink wireless transmission according to the fifth embodiment. A wireless communication system according to the fifth embodiment includes, for example, a plurality of the base stations 61 and 62 including a plurality of antennas, and a plurality of terminals 71, 72, 73, and 74. The base station 61 includes a plurality of the antennas 81 to 83, and the base station 62 includes a plurality of the antennas 84 to 86. In the present embodiment, explanation is given of a case in which the terminals 71, 73, and 74 transmit a signal to the base station 61, and the terminal 72 transmits a signal to the base station 62. The basic configuration of the communication device (a transmitter and a receiver) of the present embodiment is the same as the transmitter 1 and the receiver 2 in the above first embodiment (see Fig. 1).

In the present embodiment, the terminals 71, 73, and 74 transmit signals to the base station 41 in the uplink by spatial multiplexing by using the same time-frequency region. In this case, each of the terminals 71, 73, and 74 transmits a signal (a signal including null signals) that is generated by using the same null pattern. Such environment occurs mainly when the base station 41 receives a spatial multiplexed signal by using a plurality of antennas.

The terminals 71, 73, and 74 each transmit a different data signal; however, transmits a null signal with the same frequency at the same time. In this case, in the base station 61, the interference power from another cell can be measured in a symbol in which each terminal arranges the null signal. At this time, in the same manner as the second embodiment, a terminal belonging to another cell preferably uses a different null pattern. As explained in the first or second embodiment, the null pattern is generated by using a predetermined fixed pattern key, a pattern key that is notified from a base station to a cell, or the like.

With the configuration of the present embodiment, a base station can easily measure the interference power only from another cell. Moreover, a propagation path of a signal from a terminal in a cell can be determined by using pilot signals included in the transmitted signal. Consequently, the base station can appropriately recognize a propagation state from the terminal in the cell and an interference state from another cell. Moreover, for example, when a signal from the terminal 71 is a desired signal, a ratio between the interference power received from another terminal in the cell and the interference power received from another cell can be calculated. Therefore, a subband for signal transmission can be changed so that the interference power from another terminal in the cell becomes small. The transmission control is basically the same as that in the fourth embodiment, so that detailed explanation thereof is omitted.

In this manner, with the configuration explained in the present embodiment, the base station can appropriately recognize an interference state from another cell. Moreover, the interference power in the cell can be reduced by performing transmission control by using detailed interference power information.

Sixth Embodiment.

A communication device of the sixth embodiment is explained below. In the present embodiment, a wireless control method is explained, in which an interference power value from another cell obtained by performing the procedures explained in the first to fifth embodiments is effectively utilized. In the present embodiment, a case of using TDD (Time Division Duplex) system is explained as an example, in which an uplink and a downlink use the same frequency band alternatively by time division. However, the present invention that includes the first to fifth embodiments can be applied to a wireless transmission in general that uses a multicarrier transmission such as FDD (Frequency Division Duplex) system and a broadcast-type wireless transmission.

Recently, OFDMA/TDD system has attracted attention as a next-generation wireless system, and a method is considered in which a base station performs signal transmission in units of a certain subcarrier group (hereinafter, subband) that can be regarded as flat fading for a low-speed terminal. Specifically, a frequency scheduling is a promising technique as a control technique for realizing highly-efficient wireless transmission. In the frequency scheduling, a plurality of terminals each notifies a base station of a channel state value (CQI) in units of subband in the downlink, and the base station selects a terminal with better channel state for each subband to perform a downlink packet transmission. For performing such control, the base station is required to obtain a channel state of each terminal. Therefore, each terminal measures a channel state by using downlink pilot signals, and notifies the base station of the channel-state measurement value (CQI) in the uplink. As a method of performing the notification of the CQI with high efficiency, a document "Y.Hara, K.Oshima, "Pilot-based channel quality reporting for OFDMA/TDD systems with cochannel interference", VTC2006 Fall, Sep. 2006" discloses a pilot-base CQI notification. The method thereof is explained below.

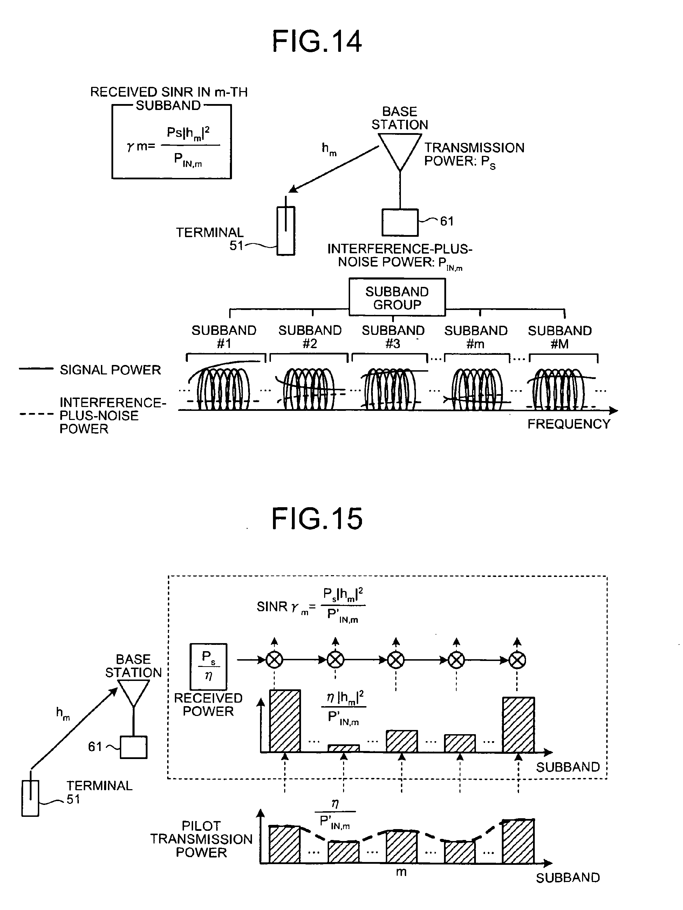

Fig. 14 is a schematic diagram illustrating a relationship between downlink subband configuration of OFDMA/TDD system and received SINR measurement of the sixth embodiment. The terminal 51 (low-speed terminal) of the present embodiment shown in Fig. 14 notifies the base station 61 of the received SINR of M number of subbands (subbands #1, #2, #3, ..., #m, ..., #M) belonging to one subband group. The base station 61 selects a subband with better propagation state from the notified subbands to use it for a packet transmission. The packet transmission control operation is explained in detail below.

First, when the base station transmits a pilot signal $s_m(p)(E[|s_m(p)|^2]=1)$ in an m-th (=1, ..., M) subband in the downlink with power $P_{DL}$, a received signal $x_m(p)$ of a p-th symbol in the m-th subband of the terminal is expressed by the following Equation.

[Equation 6]

$$x_m(p) = \sqrt{P_{DL}} h_m s_m(p) + z_m(p) \qquad (6)$$

In Equation (6), $h_m$ is a complex propagation coefficient between the base station and the terminal, $z_m(p)$ is an interference component from another cell in the terminal and a noise component and includes an interference-plus-noise power $E[|z_m(p)|^2]=P_{IN,m}$. The interference-plus-noise power $P_{IN,m}$ is different for each subband depending on the ambient environment, and the received SINR in the terminal is given by $\gamma_m=P_{DL}|h_m|^2/P_{IN,m}$.

For downlink transmission control in the base station, the terminal performs the pilot-base CQI notification in units of subband. In the pilot-base CQI notification method, the terminal measures an interference-plus-noise power value $P'_{IN,m}$ for each subband m (=1, ..., M), and generates a pilot signal of a p1 symbol expressed by the following Equation (7) by using the measurement result to transmit it.

[Equation 7]

$$s_{UL,m}(p) = \frac{\sqrt{\eta} r_m(p)}{\sqrt{P'_{IN,m}}} \qquad (p=1, ...., p1) \qquad (7)$$

In Equation (7), $r_m(p)$ is a pilot signal ($|r_m(p)|=1$) and $\eta$ is a power parameter. At this time, a received signal $x_{Bs,m}(p)$ in the subband m in the base station is expressed by the following Equation (8).

[Equation 8]

$$x_{BS,m}(p) = \sqrt{\frac{\eta}{P'_{IN,m}}} h_m r_m(p) + z_{BS,m}(p) \qquad (8)$$

In Equation (8), $z_{BS,m}(p)$ is an interference-plus-noise component in the subband m in the base station. The terminal notifies the base station of the power parameter $\eta$.

The base station estimates the received SINR of the terminal in the subband m as the following Equation (9).

[Equation 9]

$$\gamma_m^{(pre)} = \frac{P_{DL}}{\eta} \left| \frac{1}{p_1} \sum_{p=1}^{p_1} x_{BS,m}(p) r_m(p)^* \right|^2 \qquad (9)$$

In Equation (9), * is a complex conjugate. In an ideal control state ($z_{BS,m}(p)=0$, $P'_{IN,m}=P_{IN,m}$), the received SINR is expressed by the following Equation (10), so that the base station can completely estimate the received SINR of the terminal.

[Equation 10]

$$\gamma_m^{(pre)} = P_{DL} \frac{|h_m|^2}{P_{IN,m}} = \gamma_m \qquad (10)$$

In the actual environment, although the interference-plus-noise component ($z_{BS,m}(p)\neq0$) exists, an appropriate CQI notification can be performed appropriately if the interference-plus-noise component is small. Fig. 15 is a schematic diagram illustrating a relation of a transmission power of pilot signals transmitted in the pilot-base CQI notification, a received power, and a conversion into a received SINR. As shown in the figure, the received SINR information of the terminal can be obtained in the base station by transmitting the pilot signals with the transmission power that is inversely proportional to the measured interference-plus-noise power from the terminal.

At this time, it is important to accurately measure the interference-plus-noise power $P_{IN,m}$ at a terminal to perform the CQI notification with high accuracy. As described above, if the interference power measuring method explained in the first to fifth embodiments is used, the interference power from another cell can be measured with high accuracy even if a propagation path of a desired signal varies. Moreover, the interference power not at a symbol in which a pilot signal exists but at a symbol in which a data signal exists can be measured. Consequently, the terminal can measure P'$_{IN,m}$ with high accuracy, enabling to perform the CQI notification from the terminal to the base station with high accuracy.

According to the present embodiment, the present invention can be applied to the pilot-base CQI notification, in which the CQI notification from a terminal to a base station can be performed with high accuracy.

INDUSTRIAL APPLICABILITY

As described above, the communication device according to the present invention is useful for a communication system for wireless transmission, and in particular is suitable for a communication device that measures an interference power necessary for generating a channel quality indicator that is used in wireless transmission control or the like with high accuracy.

**Claims**

1. A communication device that constitutes a multicarrier wireless transmission system and communicates with a communication device (counter device) including a function of measuring an interference-plus-noise power by using a null symbol inserted into a received data, the communication device comprising:

   a data-frame generating unit that arranges a predetermined number of null symbols in a data-symbol storing region of a data frame to be transmitted to the counter device to generate a data frame including the null symbols; and
   a transmitting unit that transmits the data frame including the null symbols to the counter device by performing a predetermined transmission process.

2. The communication device according to claim 1, wherein
   the data-frame generating unit changes an arrangement position of the null symbols for each operation of generating the data frame including the null symbols, and
   the transmitting unit notifies the counter device of information uniquely indicating the arrangement position.

3. The communication device according to claim 2, wherein the data-frame generating unit randomly changes the arrangement position of the null symbols for each operation of generating the data frame including the null symbols.

4. The communication device according to claim 1, 2, or 3, wherein when a plurality of communication devices including the communication device performs a process of generating the data frame including the null symbols while synchronizing with one another and a transmission destination of the communication device is different from a transmission destination of another communication device, the data-frame generating unit generates the data frame including the null symbols by arranging the null symbols at a position different from a position at which the another communication device arranges null symbols.

5. The communication device according to any one of claims 1 to 4, wherein the data-frame generating unit generates the data frame including the null symbols so that an occupancy of the null symbols does not exceed an upper limit that is determined based on an allowable error and a data transmission efficiency in an interference-plus-noise power measuring process.

6. The communication device according to any one of claims 1 to 5, wherein when transmitting data frames including the null symbols to the counter device by using a plurality of antennas at a same timing by a spatial multiplexing, the data-frame generating unit generates a plurality of data frames each including the null symbols arranged at a same position.

7. The communication device according to any one of claims 1 to 6, wherein when transmitting the data frame including the null symbols to the counter device including a plurality of antennas while synchronizing with another communication device and a transmission destination of the communication device is same as a transmission destination of the another communication device, the data-frame generating unit generates the data frame including the null symbols by arranging the null symbols at a position same as a position at which the another communication device arranges null symbols.

8. A communication device that constitutes a multicarrier wireless transmission system and measures an interference-plus-noise power by using a null symbol inserted into a received data from a communication device (counter device) as a communication partner, the communication device comprising:

a position specifying unit that specifies a null-symbol arranged position in a data frame including null symbols; and
a power measuring unit that measures a power of a symbol at the null-symbol arranged position specified by the position specifying unit as a target.

9. The communication device according to claim 8, wherein the power measuring unit obtains power-ratio information between a pilot signal and a data signal that is transmitted by the counter device, estimates an interference-plus-noise power by a transmission signal from the counter device based on the power-ratio information, and notifies the counter device of a power ratio between the interference-plus-noise power and an interference-plus-noise power obtained by performing a power measuring process.

10. The communication device according to claim 8 or 9, wherein the power measuring unit measures power for each subband that includes a predetermined number of subcarriers, and generates a pilot signal that corresponds to each subband and has power that is determined based on a result of measurement for each subband to transmit the pilot signal to the counter device.

11. A communication device that constitutes a multicarrier wireless transmission system including a plurality of communication devices, the communication device comprising:

a data-frame generating unit that arranges a predetermined number of null symbols in a data-symbol storing region of a data frame to be transmitted to a counter device that is a communication device as a communication partner to generate a data frame including the null symbols;
a power measuring unit that, upon receiving the data frame including the null symbols from the counter device, measures power of the null symbols and takes a result of measurement as an interference-plus-noise power measurement result; and
a transmitting unit that transmits the data frame including the null symbols generated by the data-frame generating unit and the interference-plus-noise power measurement result by the power measuring unit to the counter device, wherein
a transmission control process for communication between the counter device and the communication device is performed based on an interference-plus-noise power measured by the counter device by using the data frame including the null symbols generated by the data-frame generating unit and an interference-plus-noise power measured by the power measuring unit by using the data frame including the null symbols received from the counter device.

12. The communication device according to claim 11, wherein at least any one of a scheduling process, an MCS (Modulation&Coding Scheme) determining process, a transmission power control process, and an antenna weight generating process is performed as the transmission control process.

13. The communication device according to claim 11 or 12, wherein
the data-frame generating unit changes an arrangement position of the null symbols for each operation of generating the data frame including the null symbols, and
the transmitting unit notifies the counter device of information uniquely indicating the arrangement position.

14. The communication device according to claim 13, wherein the data-frame generating unit randomly changes the arrangement position of the null symbols for each operation of generating the data frame including the null symbols.

15. The communication device according to any one of claims 11 to 14, wherein when a plurality of communication devices including the communication device performs a process of generating the data frame including the null symbols while synchronizing with one another and a transmission destination of the communication device is different from a transmission destination of another communication device, the data-frame generating unit generates the data frame including the null symbols by arranging the null symbols at a position different from a position at which the another communication device arranges null symbols.

16. The communication device according to any one of claims 11 to 15, wherein the data-frame generating unit generates the data frame including the null symbols so that an occupancy of the null symbols does not exceed an upper limit that is determined based on a measurement error threshold of the interference-plus-noise power and a data transmission efficiency.

17. The communication device according to any one of claims 11 to 16, wherein when transmitting data frames including the null symbols to the counter device by using a plurality of antennas at a same timing by a spatial multiplexing, the data-frame generating unit generates a plurality of data frames each including the null symbols arranged at a same position.

18. The communication device according to any one of claims 11 to 17, wherein the interference-plus-noise power measuring unit obtains power-ratio information between a pilot signal and a data signal that is transmitted by the counter device, estimates an interference-plus-noise power by a transmission signal from the counter device based on the power-ratio information, and notifies the counter device of a power ratio between the interference-plus-noise power and an interference-plus-noise power obtained by performing a power measuring process.

19. The communication device according to any one of claims 11 to 18, wherein when transmitting the data frame including the null symbols to the counter device including a plurality of antennas while synchronizing with another communication device and a transmission destination of the communication device is same as a transmission destination of the another communication device, the data-frame generating unit generates the data frame including the null symbols by arranging the null symbols at a position same as a position at which the another communication device arranges null symbols.

20. The communication device according to any one of claims 11 to 19, wherein the interference-plus-noise power measuring unit measures power for each subband that includes a predetermined number of subcarriers, and generates a pilot signal that corresponds to each subband and has power that is determined based on a result of measurement for each subband to transmit the pilot signal to the counter device.

21. A transmission control method for a specific communication device communicating another communication device in a multicarrier wireless transmission system, the transmission control method comprising:

a data-frame generating step of arranging a predetermined number of null symbols in a data-symbol storing region of a data frame to be transmitted to a counter device that is a communication device as a communication partner to generate a data frame including the null symbols;
a data-frame transmitting step of transmitting the data frame including the null symbols to the counter device;
a power-information obtaining step of obtaining an interference-plus-noise power information transmitted from the counter device; and
a transmission controlling step of performing a transmission control process for a communication between the counter device and the communication device based on obtained interference-plus-noise power information.

22. The transmission control method according to claim 21, wherein at least any one of a scheduling process, an MCS (Modulation&Coding Scheme) determining process, a transmission power control process, and an antenna weight generating process is performed as the transmission control process.

23. The transmission control method according to claim 21 or 22, wherein
the data-frame generating step includes changing an arrangement position of the null symbols for each operation of generating the data frame including the null symbols, and
the transmission control method further includes an arrangement-position-information notifying step of notifying the counter device of information uniquely indicating the arrangement position.

24. The transmission control method according to claim 23, wherein the data-frame generating step includes randomly changing the arrangement position of the null symbols for each operation of generating the data frame including the null symbols.

25. The transmission control method according to any one of claims 21 to 24, wherein when a plurality of communication devices including the communication device performs a process of generating the data frame including the null symbols while synchronizing with one another and a transmission destination of the communication device is different from a transmission destination of another communication device, the data-frame generating step includes generating the data frame including the null symbols by arranging the null symbols at a position different from a position at which the another communication device arranges null symbols.

**26.** The transmission control method according to any one of claims 21 to 25, wherein the data-frame generating step includes generating the data frame including the null symbols so that an occupancy of the null symbols does not exceed an upper limit that is determined based on an allowable error and a data transmission efficiency in an interference-plus-noise power measuring process.

**27.** The transmission control method according to any one of claims 21 to 26, wherein when transmitting data frames including the null symbols to the counter device by using a plurality of antennas at a same timing by a spatial multiplexing, the data-frame generating step includes generating a plurality of data frames each including the null symbols arranged at a same position.

**28.** The transmission control method according to any one of claims 21 to 27, wherein when transmitting the data frame including the null symbols to the counter device including a plurality of antennas while synchronizing with another communication device and a transmission destination of the communication device is same as a transmission destination of the another communication device, the data-frame generating step includes generating the data frame including the null symbols by arranging the null symbols at a position same as a position at which the another communication device arranges null symbols.

# FIG.1

# FIG.2

Subcarriers

Time Frame

- [0] Null signal
- [▓] Pilot signal
- [ ] Data signal

# FIG.3

# FIG.4

| PATTERN KEY k | NULL PATTERN P |
|---|---|
| 1 | $(0, 1, 2, ...., q_{null}-2, q_{null}-1)$ |
| 2 | $(0, 1, 2, ...., q_{null}-2, q_{null})$ |
| 3 | $(0, 1, 2, ...., q_{null}-2, q_{null}+1)$ |
| ⋮ | ⋮ |
| $Q-q_{null}+1Cq_{null}$ | $(Q-2q_{null}+1, ...., Q-q_{null}-1, Q-q_{null})$ |

# FIG.5

$$0 \qquad n_0 \qquad 2n_0 \qquad 3n_0 \qquad\qquad\qquad (q_{null}-1)n_0 \quad Q-q_{null}$$

NULL-SIGNAL
INSERTING UNIT

# FIG.6

NULL PATTERN KEY k

# FIG.7

FIG.8

## FIG.9

INTERFERENCE

DESIRED SIGNAL

DESIRED SIGNAL

BASE STATION — 41

TERMINAL — 51

TERMINAL — 52

BASE STATION — 42

SUBCARRIER

TIME FRAME

Time

SUBCARRIER

TIME FRAME

Time

# FIG.10

# FIG.11

INTERFERENCE POWER RATIO R

# FIG.12

START

RECEIVE INTERFERENCE POWER RATIO R — S11

S12
R>Rth ? — NO

YES

OBTAIN INTERFERENCE POWER RATIO R' IN ANOTHER SUBBAND — S14

S15
R>R' ? — NO

YES

CHANGE TO SIGNAL TRANSMISSION IN ANOTHER SUBBAND — S16

CONTINUE SIGNAL TRANSMISSION IN CURRENT SUBBAND — S13

END

# FIG.13

**Legend:**
- 0 Null signal
- ▨ Pilot signal
- ☐ Data signal

EP 2 110 974 A1

# FIG.14

RECEIVED SINR IN m-TH
SUBBAND

$$\gamma m = \frac{Ps|h_m|^2}{P_{IN,m}}$$

BASE STATION

$h_m$

TRANSMISSION POWER: $P_S$

TERMINAL
51

61

INTERFERENCE-PLUS-NOISE POWER: $P_{IN,m}$

SUBBAND GROUP

SUBBAND #1   SUBBAND #2   SUBBAND #3   SUBBAND #m   SUBBAND #M

—— SIGNAL POWER

- - - - INTERFERENCE-PLUS-NOISE POWER

FREQUENCY

# FIG.15

$$\text{SINR } \gamma_m = \frac{P_s|h_m|^2}{P'_{IN,m}}$$

BASE STATION

$h_m$

61

TERMINAL
51

$\frac{P_s}{\eta}$

RECEIVED POWER

$\frac{\eta|h_m|^2}{P'_{IN,m}}$

SUBBAND

PILOT TRANSMISSION POWER

$\frac{\eta}{P'_{IN,m}}$

m

SUBBAND

# FIG.16

Subcarriers
Time Frame

Subcarriers
Time Frame

TIME

Time

Interference

Signal

Same time &
frequency

BASE
STATION

TERMINAL

TERMINAL

BASE
STATION

Pilot signal
Data signal

# FIG.17

Subcarriers          Time Frame

200 kHz

1 ms

Time

8.33 ms   75.0 ms

| GI | Data |

83.33 ms

▓ Pilot signal

☐ Data signal

# FIG.18

$f_d$ =100 Hz

$f_d$ =75 Hz

$f_d$ =50 Hz

$f_d$ =25 Hz

$f_d$ =0 Hz

Interference Measurement Error [dB]

Received SINR [dB]

**INTERNATIONAL SEARCH REPORT**

| International application No. |
|---|
| PCT/JP2008/052164 |

A. CLASSIFICATION OF SUBJECT MATTER
*H04J11/00*(2006.01)i

According to International Patent Classification (IPC) or to both national classification and IPC

B. FIELDS SEARCHED

Minimum documentation searched (classification system followed by classification symbols)
H04J11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2004/077685 A2 (FLARION TECHNOLOGIES, INC.), 10 September, 2004 (10.09.04), Fig. 7 | 1,4-9,11,12, 15-19,21,22, 25-28 |
| A | & US 2004/0166886 A1 & US 2004/0166887 A1<br>& WO 2004/077728 A2 & EP 1597852 A2<br>& AU 2004214805 A1 & BR 200407799 A<br>& KR 2005099632 A & CN 1778058 A<br>& MX 2005008893 A1 & CA 2516439 A1 | 2,3,10,13, 14,20,23,24 |
| X | WO 2004/077728 A2 (FLARION TECHNOLOGIES, INC.), 10 September, 2004 (10.09.04), Fig. 7 | 1,4-9,11,12, 15-19,21,22, 25-28 |
| A | & US 2004/0166886 A1 & US 2004/0166887 A1<br>& WO 2004/077685 A2 & EP 1609280 A2<br>& AU 2004214806 A1 & BR 200407800 A<br>& KR 2005099633 A & CN 1871862 A<br>& MX 2005008934 A1 & CA 2516441 A1 | 2,3,10,13, 14,20,23,24 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 01 May, 2008 (01.05.08) | 13 May, 2008 (13.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/052164

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-238269 A  (KDDI Corp.),<br>31 August, 2001 (31.08.01),<br>Par. Nos. [0041] to [0044]; Fig. 12<br>& US 2001/0024427 A1    & US 6836484 B2<br>& JP 3826653 B2 | 10,20 |
| A | JP 2004-207901 A  (Matsushita Electric<br>Industrial Co., Ltd.),<br>22 July, 2004 (22.07.04),<br>Full text; all drawings<br>& WO 2004/059891 A1     & AU 2003289056 A1<br>& EP 1578044 A1         & US 2006/0116078 A1<br>& CN 1726667 A          & US 7215927 B2 | 10,20 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Ji-Woong Choi ; Yong-Hwan Lee.** Optimum pilot pattern for channel estimation in OFDM systems. *IEEE Transactions On Wireless Communications,* September 2005, vol. 4 (5), 2083-2088